# FASCICULE DE BREVET EUROPEEN

(11) **EP 1 040 274 B1**
(45) Date de publication et mention de la délivrance du brevet: **27.03.2002**
(21) Numéro de dépôt: 98959982.4
(22) Date de dépôt: 14.12.1998
(51) Int. Cl.: F04B 43/09, F04B 53/10, B64G 1/50

(54) **POMPE A DEPLACEMENT POSITIF**
VERDRÄNGUNGSPUMPE
PUMP WITH POSITIVE DISPLACEMENT

(30) Priorité: 16.12.1997 FR 9715958
(43) Date de publication de la demande: 04.10.2000
(73) Titulaire: CENTRE NATIONAL D'ETUDES SPATIALES, F-75039 Paris Cedex 01 (FR)
(72) Inventeur: THOMIN, Georges, F-31320 Rebigue (FR); LAFFETA, Guy, F-31270 Cugnaux (FR); ANDUZE, Marc, F-31840 Aussonne Cedex 3579 (FR); CAEN, Robert, F-31270 Frouzins (FR); COLIN, Stéphane, F-31400 Toulouse (FR); MARE, Jean-Charles, F-31450 Odars (FR)
(74) Mandataire: Cabinet BARRE LAFORGUE & associés
(86) Numéro de dépôt international: FR9802722
(87) Numéro de publication internationale: WO9931388

(56) Documents cités:
- US-A- 2 797 646
- US-A- 3 508 848
- US-A- 3 657 930
- US-A- 4 421 464
- US-A- 4 585 397

## Description

L'invention concerne une pompe à déplacement positif pour le pompage et l'entraînement d'un liquide dans une canalisation.

Elle s'étend à un dispositif de contrôle thermique des composants d'un système spatial, tel qu'un satellite artificiel ou une station spatiale, de longue durée de vie.

Les systèmes spatiaux de longue durée de vie tels que les satellites commerciaux inhabités (de télécommunications, scientifiques, d'observation...) ou les stations spatiales, notamment les stations orbitales, tendent à se multiplier considérablement. En conséquence, les contraintes de fabrication industrielle et de coût prennent une importance croissante, par rapport aux seules performances techniques.

En particulier, ces systèmes spatiaux incorporent des composants -notamment électroniques- qui émettent de la chaleur et doivent être refroidis, et qui dissipent des puissances de plus en plus importantes (avec des densités de puissance évoluant conjointement), à maintenir dans des plages de températures de plus en plus resserrées. Les distances de transport entre source chaude et source froide augmentent également. Les moyens de contrôle thermique passif classiques (notamment par conduction, rayonnement) s'avèrent donc insuffisants.

Lorsque l'utilisation de la conduction et du rayonnement thermique s'avère insuffisante, les dispositifs de contrôle thermique connus embarqués sur les satellites sont en général formés de caloducs. Les caloducs présentent en effet l'avantage d'une fiabilité et d'une durée de vie plus grandes que celles des pompes mécaniques. Il est à noter en effet que dans un satellite, la durée de vie des équipements doit être assurée, avant le lancement, pour plusieurs années. Classiquement cette durée de vie doit être de l'ordre de 10 à 15 ans.

Les caloducs présentent néanmoins des inconvénients : pour les tester au sol, il est nécessaire de placer avec une faible inclinaison ne correspondant pas nécessairement à la configuration de vol, ce qui nuit à la représentativité des tests ; ils nécessitent un dimensionnement sur mesure lors de l'intégration dans chaque système spatial ; leur rigidité est une contrainte qui pose des problèmes lors de l'intégration qui est parfois difficile, voire impossible ; ils sont très sensibles aux gaz incondensables qu'ils produisent, et leur efficacité et leurs caractéristiques sont fortement affectées par ces gaz incondensables ;ils présentent une faible capacité de transport de puissance thermique.

Outre les caloducs, on a aussi proposé des dispositifs de contrôle thermique comprenant une ou plusieurs boucle(s) de liquide caloporteur associée à un dispositif de pompage de type capillaire ou mécanique.

Les dispositifs de pompage de type capillaire ont une faible capacité de transport (débit et hauteur manométriques limités), notamment pour les essais au sol en présence de gravité ; sont complexes à amorcer ; tolèrent mal les modes de fonctionnement extrêmes (lorsque la puissance à transporter devient très faible ou en présence de gaz incondensables).

Des dispositifs de pompage mécaniques sous forme d'une pompe centrifuge ont été utilisés en pratique dans certaines missions habitées (navettes, capsules, stations...) pour le fonctionnement de boucles à liquide caloporteur monophasique.

Dans les très rares cas de missions non habitées où un pompage mécanique a été retenu, on a aussi opté pour une pompe centrifuge. Ainsi, la publication "Integrated Pump Assembly - An Active Cooling System for Mars Pathfinder Thermal Control" Gajanana C. Birar et al, SAE TECHNICAL PAPER SERIES 961489 pp1-8, 26th International Conference on Environmental Systems, Monterey, Califomia, July 8-11, 1996, explique qu'une utilisation d'une pompe à déplacement positif a été rejetée, au bénéfice d'une pompe centrifuge, pour la boucle de contrôle thermique de la sonde martienne "Pathfinder". Cette sonde était qualifiée pour une durée de vie de quelques mois.

Par ailleurs, une pompe centrifuge n'est pas appropriée dans le cas d'une boucle à liquide diphasique pour un système spatial tel qu'un satellite commercial car elles présentent une consommation électrique importante, un encombrement important et sont d'un coût élevé.

Les pompes à déplacement positif (US-2797646,US-4585397, US-4421464) incorporent de nombreuses pièces mobiles en contact (pompes à organe de pompage à déplacement alternatif tel que piston ou organe déformable) dynamique sujettes à usure, notamment les valves d'entrée et de sortie du manifold et les pièces de transmission de mouvement à l'organe de pompage, et dont la durée de vie ne peut pas être déterminée au sol autrement que par des essais de durée de vie, généralement statistiques. Les performances de ce type de pompe varient aussi considérablement selon l'usure et se dégradent donc au cours du temps. De plus, ces pompes génèrent des contraintes importantes sur les matériaux et des vibrations et forces déséquilibrées.

En particulier, US-4421464 décrit une pompe pour le pompage d'hélium liquide comprenant un soufflet actionné par un moteur électromagnétique totalement immergé dans l'hélium liquide. La partie mobile de la pompe et du moteur étant reliée par des connexions électriques souples et les vannes étant des vannes à membranne, une telle pompe ne peut pas être qualifiée pour les applications spatiales de longue durée de vie. Par ailleurs, elle n'est pas applicable au pompage de fluides tels que les fluides caloporteurs (par exemple l'ammoniac) des boucles de contrôle thermique à fluide diphasique pour systèmes spatiaux avec lesquels les composants du moteur ne sont pas compatibles.

Ainsi, on considère jusqu'à maintenant que les pompes à déplacement positif ne peuvent pas être qualifiées pour les applications spatiales de longue durée de vie.

Par ailleurs, le pompage d'un fluide caloporteur de contrôle thermique -notamment dans une boucle à fluide diphasique- d'un système spatial impose des performances particulièrement sévères parmi lesquelles on peut citer : une hauteur de pompage de plusieurs mètres, une résistance à une pression statique élevée (pouvant aller jusqu'à 160.10⁵ Pa avec déformation permanente et 80.10⁵ Pa sans déformation permanente), un débit de plusieurs grammes par seconde, une consommation énergétique et un encombrement réduits. En outre, il doit être possible de faire varier la puissance à transporter dans une large plage, et de réguler le débit aisément (c'est-à-dire à partir d'un système électronique simple, fiable et peu encombrant).

Ainsi, le générateur de pression hydrostatique décrit par US-3657930 dont l'organe de pompage est formé d'un cristal piézoélectrique ne répond pas à ces critères, l'amplitude de déplacement d'un tel organe de pompage n'étant pas suffisante. En outre, là encore, des connexions électriques flexibles doivent être prévues pour alimenter le cristal en énergie électrique à travers la paroi du cylindre, posant ainsi des problèmes de durée de vie. Egalement, US-3508848 décrit une pompe à membrane à simple effet comprenant des diodes fluidiques vortex et activée par un oscillateur pneumatique. Cette solution nécessite donc une source de pression alternative externe pneumatique et sur laquelle les problèmes de qualification et de durée de vie susmentionnés sont reportés, et ne permet pas d'atteindre les performances sus-indiquées.

En pratique, il n'existe donc pas de pompe mécanique pouvant être qualifiée pour une longue durée de vie, et adaptée pour pouvoir être intégrée dans un système spatial -notamment un satellite commercial inhabité ou une station spatiale- pour le pompage d'un fluide caloporteur de contrôle thermique, notamment dans une boucle à liquide diphasique.

En particulier, même si l'emploi de boucles de contrôle thermique à liquide diphasique est théoriquement possible dans les satellites commerciaux inhabités, leur mise en oeuvre pratique se heurte au fait qu'il n'existe pas de pompe qualifiée correspondante.

L'invention vise donc à pallier ces inconvénients et à proposer une pompe à déplacement positif adaptée pour pouvoir être intégrée dans un système spatial tel qu'un satellite ou une station spatiale et dont la durée de vie dans l'espace peut être garantie au sol pour plusieurs années -notamment pour au moins dix ans-.

L'invention vise aussi à proposer une telle pompe plus particulièrement adaptée pour le pompage d'un liquide caloporteur de contrôle thermique, notamment un fluide caloporteur diphasique d'une boucle à fluide diphasique, par exemple l'ammoniac.

L'invention vise aussi en particulier à proposer une pompe permettant l'emploi de boucles de contrôle thermique à liquide diphasique dans les satellites commerciaux inhabités ou les stations spatiales.

L'invention vise ainsi plus particulièrement à proposer une telle pompe qui présente un encombrement et un poids réduits -notarnment des dimensions de l'ordre du décimètre pour un poids de l'ordre du kilogramme- ; dont les caractéristiques de fonctionnement restent stables dans le temps ; qui fournit un débit unidirectionnel dont la valeur peut être aisément pilotée et peut atteindre plusieurs grammes par seconde ou plusieurs centimètres cubes par seconde, sans nécessiter une régulation électronique complexe ; qui fournit une hauteur de pompage pouvant aller jusqu'à plusieurs mètres ; qui résiste à une pression statique élevée (pouvant aller jusqu'à 160.10⁵ Pa avec déformation permanente, et 80.10⁵ Pa sans déformation permanente) ; qui présente une consommation énergétique faible -notamment inférieure à 15W-.; qui est de construction simple, robuste et peu coûteuse.

Pour ce faire, l'invention concerne une pompe à déplacement positif pour le pompage et l'entraînement d'un liquide dans une canalisation, comprenant:
. au moins un cylindre renfermant un soufflet de pompage déformable séparant deux chambres de pompage dans ce cylindre, l'une des chambres de pompage étant formée de l'intérieur du soufflet tandis que l'autre est formée à l'extérieur du soufflet, ce cylindre étant délimité par une paroi hermétiquement close à l'exception d'orifices d'entrée/sortie du liquide débouchant dans chacune des chambres de pompage,
. des moyens moteurs associés au soufflet adaptés pour le déformer et le déplacer alternativement dans le cylindre, les volumes des deux chambres de pompage variant en opposition, ces moyens moteurs comprenant au moins un organe actionneur ferromagnétique et/ou aimanté disposé à l'intérieur du cylindre et relié au soufflet pour le déformer et le déplacer, et des moyens à bobinages, disposés à l'extérieure de la paroi du cylindre, de transmission d'énergie motrice électromagnétique par induction à cet organe actionneur depuis l'extérieur du cylindre, ces moyens de transmission d'énergie motrice étant exempts de pièce traversant la paroi du cylindre -notamment de pièce mobile entraînant une production de frottement solide dynamique-,
. un manifold à diodes fluidiques de type vortex, exempt de valve à organe mobile, relié à la canalisation et aux orifices d'entrée/sortie, et adapté pour contrôler le sens global de pompage et d'écoulement du liquide dans la canalisation lors des déformations et déplacements alternatifs du soufflet dans le cylindre.

Dans tout le texte, on adopte la terminologie suivante :
- cylindre : toute enceinte délimitée par une paroi (en une ou plusieurs pièces), quelles que soient sa forme et ses dimensions,
- diode fluidique : tout dispositif pouvant être traversé par un liquide et présentant, du fait de sa conformation, une résistance à l'écoulement du liquide dans un sens qui est supérieure à la résistance à l'écoulement du liquide dans l'autre sens ; la diode fluidique est dite "passante" dans le sens où elle offre le moins de résistance ;
- frottement solide dynamique : frottement de contact entre au moins deux solides en mouvement l'un par rapport à l'autre,
- volumes variant en opposition : un volume augmente d'une valeur alors que l'autre diminue simultanément de la même valeur.

Avantageusement et selon l'invention, le soufflet de pompage est formé d'une pièce d'un seul tenant déformable. Ce soufflet peut être métallique.

En outre, avantageusement et selon l'invention, l'organe actionneur est disposé dans un prolongement de la chambre de pompage disposée à l'extérieur du soufflet. Le soufflet peut être ou non symétrique de révolution autour de son axe principal.

Avantageusement et selon l'invention, l'organe actionneur comprend une pièce ferromagnétique et/ou aimantée, logée dans le cylindre -notamment dans un prolongement de l'une des deux chambres de pompage-, et qui est reliée par une tige à une paroi d'extrémité du soufflet de pompage, de sorte que cette pièce de l'organe actionneur et cette paroi d'extrémité sont solidaires en translation dans le cylindre. Ladite pièce, la tige et la paroi d'extrémité du soufflet sont entièrement logées dans le cylindre.

En outre, avantageusement et selon l'invention, les moyens moteurs sont adaptés pour commander l'organe de pompage à une fréquence comprise entre 1 Hz et 50 Hz, notamment entre 1 Hz et 10 Hz.

Par ailleurs, avantageusement et selon l'invention, la pompe comporte des moyens de guidage en translation de l'organe actionneur dans le cylindre, formés de lames flexibles dont la raideur axiale (c'est-à-dire selon l'axe d'expansion et de contraction du soufflet) est inférieure à celle du soufflet de pompage. Ces moyens de guidage sont aussi entièrement logés dans le cylindre, prennent appui sur la paroi du cylindre, et sont adaptés pour ne produire aucun frottement solide dynamique. Fonctionnant uniquement en flexion axiale, ils sont exempts de pièce mobile produisant un tel frottement solide dynamique.

Avantageusement et selon l'invention, le manifold comprend, interposée entre chaque chambre de pompage et une extrémité d'aspiration de la canalisation, une diode fluidique amont passante vers la chambre de pompage correspondante, et, interposée entre chaque chambre de pompage et une extrémité de refoulement de la canalisation, une diode fluidique aval passante vers l'extrémité de refoulement, de sorte que la pompe est du type à double effet.

Selon l'invention, les diodes fluidiques du manifold sont de type vortex, c'est-à-dire comprennent une cavité principale globalement symétrique de révolution, un premier orifice d'entrée débouchant axialement dans la cavité et un deuxième orifice de sortie débouchant tangentiellement dans la cavité.

Les diodes fluidiques vortex ne présentent aucun contact dynamique solide/solide, sont exemptes de pièce mobile et de portions déformables. Elles sont donc entièrement parfaitement statiques.

En outre, avantageusement et selon l'invention, le manifold comprend une cavité tampon amont recevant le liquide de l'extrémité d'aspiration de la canalisation, et une cavité tampon aval de laquelle le liquide est refoulé vers l'extrémité de refoulement de la canalisation, et les diodes fluidiques sont interposées entre ces cavités tampons et les orifices d'entrée/sortie dans les chambres de pompage. Ces cavités tampons permettent de lisser les éventuelles variations instantanées du débit global dans la canalisation.

L'invention s'étend en outre à un dispositif de contrôle thermique des composants d'un système spatial, tel qu'un satellite ou une station spatiale, comprenant une boucle de fluide caloporteur diphasique et au moins une pompe selon l'invention.

La pompe selon l'invention est totalement exempte de pièce mobile à contact solide/solide ou présentant un frottement solide dynamique. De la sorte, sa durée de vie peut être aisément déterminée au sol, notamment à partir d'essais accélérés, et cette durée de vie est importante, notamment de l'ordre de plusieurs années.

En outre, la pompe selon l'invention est avantageusement une pompe à soufflet à double effet fournissant un débit relativement régulier et avec peu de vibrations, dans laquelle le soufflet est soumis à des contraintes de pression équilibrées de part et d'autre de l'organe de pompage déformable, et présentant une faible consommation d'énergie. Ses caractéristiques restent constantes dans le temps.

Une pompe selon l'invention peut aisément être réalisée sous une forme adaptée à son intégration dans un système spatial tel qu'un satellite commercial inhabité. Elle est extrêmement simple, peu encombrante et peu coûteuse. Elle présente des performances élevées compatibles avec celles des dispositifs de contrôle thermique tels que les boucles à fluide diphasique des systèmes spatiaux.

Une pompe selon l'invention est ainsi particulièrement bien adaptée pour le pompage du liquide d'une boucle de contrôle thermique à fluide caloporteur diphasique. En particulier, son débit peut être aisément piloté, par exemple par ajustement sur la fréquence de fonctionnement du soufflet. En outre, le débit réel délivré par la pompe varie peu en fonction des variations de pertes de charge dans la canalisation.

L'invention s'étend aussi à une pompe et à un dispositif de contrôle thermique caractérisés en combinaison par tout ou partie des caractéristiques mentionnées ci-dessus ou ci-après.

D'autres buts, caractéristiques et avantages de l'invention apparaîtront à la lecture de la description suivante qui se réfere aux figures annexées et dans lesquelles :

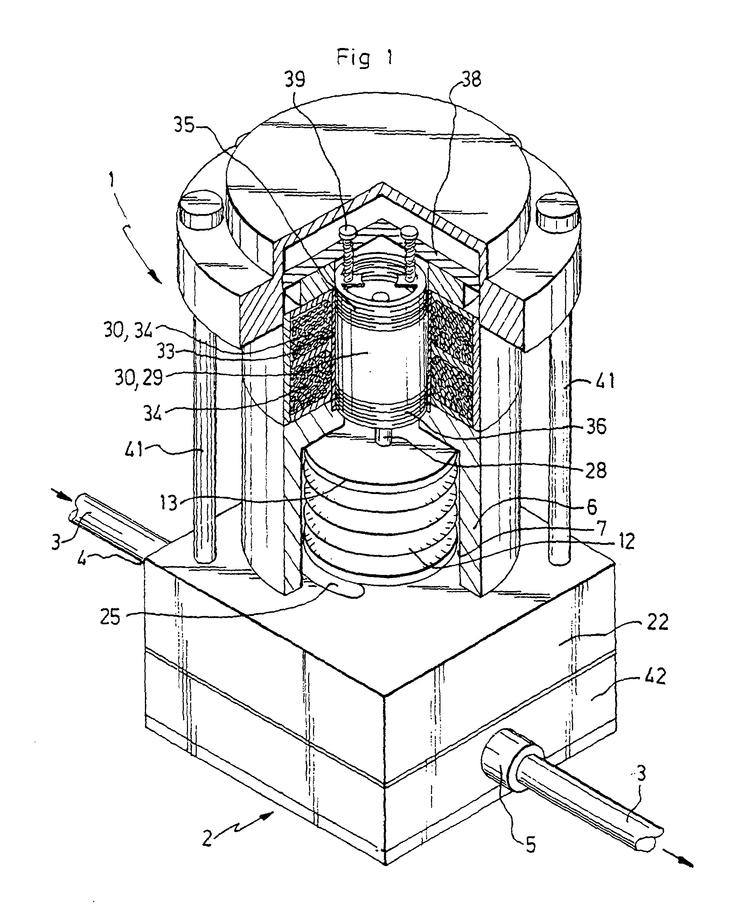

- la figure 1 est une vue schématique en perspective partiellement arrachée d'une pompe selon un mode de réalisation de l'invention donné à titre d'exemple non limitatif,
- la figure 2 est une vue schématique en coupe axiale de la pompe de la figure 1,

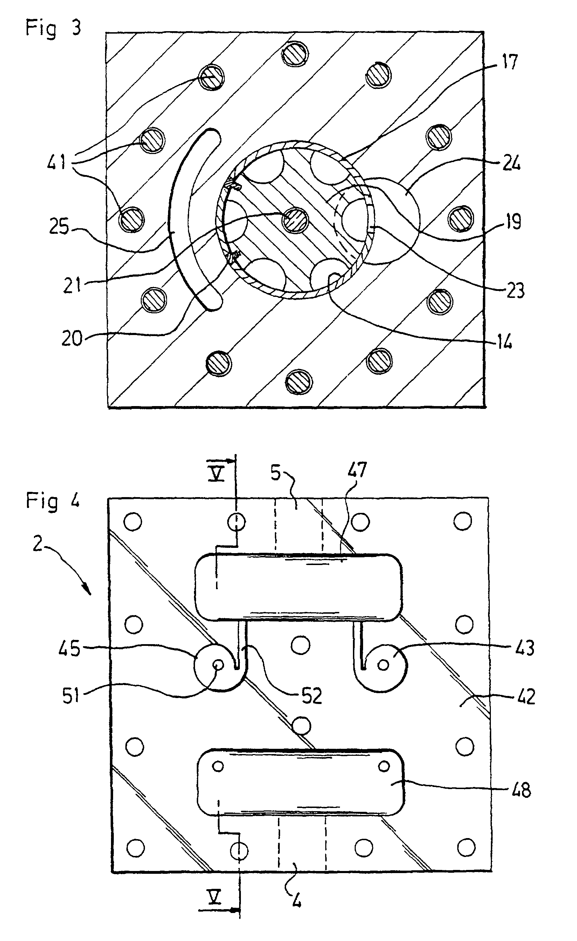

- la figure 3 est une vue schématique en coupe selon la ligne III-III de la figure 2,

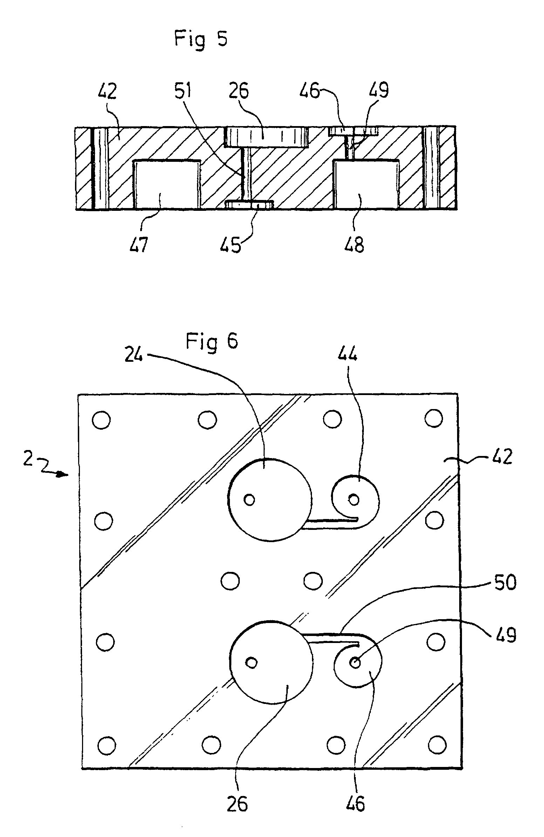

- la figure 4 est une vue schématique en coupe selon la ligne IV-IV de la figure 2,
- la figure 5 est une vue schématique en coupe selon la ligne V-V de la figure 4 du manifold de la pompe de la figure 1,
- la figure 6 est une vue schématique de dessus de la figure 5,
- les figures 7 et 8 sont des schémas illustrant le fonctionnement de l'organe déformable de pompage et des diodes fluidiques respectivement dans chaque sens de déplacement de l'organe déformable de pompage,
- la figure 9 est un schéma illustrant le principe d'un dispositif de contrôle thermique selon l'invention.

La pompe représentée sur les figures comprend un corps de pompe 1 et un manifold 2 interposés sur une canalisation 3. La pompe permet le pompage et l'entraînement d'un liquide dans la canalisation 3 qui est reliée au manifold 2 d'une part par une extrémité d'aspiration 4 par laquelle le liquide arrive au manifold 2, et d'autre part par une extrémité de refoulement 5 de laquelle le liquide sort sous pression du manifold 2.

Le corps de pompe 1 comprend un cylindre 6 délimité par une paroi 7 hermétiquement close à l'exception d'orifices 23, 25 d'entrée/sortie du liquide. Cette paroi 7 peut être formée d'une seule surface continue d'une seule pièce (par exemple issue de fonderie) ou comme dans l'exemple représenté, résulter de l'assemblage de plusieurs pièces les unes aux autres.

Le cylindre 6 renferme un soufflet 12 de pompage déformable disposé dans le cylindre 6 de façon à séparer deux chambres de pompage 10, 11 dans le cylindre 6, à savoir une chambre 10 extérieure au soufflet 12, et une chambre 11 à l'intérieur du soufflet 12. Le cylindre 6 et le soufflet 12 sont de préférence symétriques -notamment symétriques de révolution- par rapport à un même axe principal.

Le soufflet 12 est avantageusement métallique et constitué soit en une seule pièce usinée, soit d'un ensemble de rondelles Belleville identiques empilées les unes sur les autres co-axialement tête bêche et soudées bord à bord à l'intérieur et à l'extérieur. Le soufflet 12 comprend une pluralité de plis 18 et une paroi d'extrémité 13 qui vient coiffer le dernier pli. Par ailleurs, le soufflet 12 comprend une base 14 pour son montage sur la paroi 7 du cylindre 6, plus précisément sur une portion 15 de cette paroi 7 formant le fond du cylindre 6 orienté du côté du manifold 2. La base 14 du soufflet 12 est en forme générale de collet, c'est-à-dire présente une couronne 16 soudée au premier pli ou le prolongeant, et une jupe 17 prolongeant axialement la couronne 16 à l'opposé des plis 18 du soufflet 12. Une plaque 19 de montage est associée à l'extrémité axiale de la jupe 17 par des vis 20 radiales de montage de cette plaque 19 sur la jupe 17. La plaque de montage 19 est dotée d'un taraudage axial permettant de recevoir une vis 21 de fixation du soufflet 12.

Le corps de pompe 1 comprend une plaque de base 22 qui forme notamment le fond 15 du cylindre 6, et est dotée d'un logement de réception de la base 14 du soufflet 12. La vis 21 de fixation du soufflet 12 est engagée axialement dans un logement correspondant de la plaque de base 22, par le dessous, pour pouvoir être introduite dans le taraudage axial de la plaque 19 de montage, ce qui a pour effet de plaquer la couronne 16 contre le fond 15. Des joints d'étanchéité peuvent être prévus, si nécessaire, par exemple un joint spi entre la couronne 16 et le fond 15.

La jupe 17 et/ou la plaque de montage 19 comportent au moins une lumière 23 mettant en communication la chambre de pompage interne 11 du soufflet 12 avec une cavité en regard 24 ménagée dans la plaque de base 22. Par ailleurs, une lumière 25 est ménagée à l'extérieur du soufflet 12 à travers le fond 15 pour mettre en communication la chambre de pompage externe 10 avec une cavité 26 en regard ménagée dans la plaque de base 22. La lumière 23 fait office d'orifice d'entrée/sortie du liquide débouchant dans la chambre de pompage interne 11. La lumière 25 fait office d'orifice d'entrée/sortie du liquide débouchant dans la chambre de pompage externe 10.

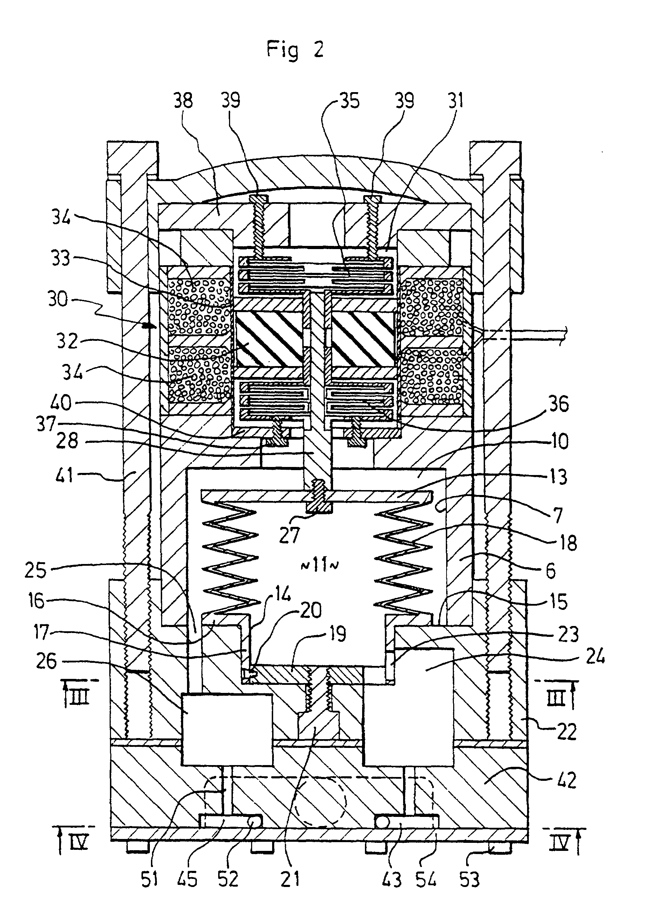

Le soufflet 12 peut comprendre par exemple entre cinq et cinquante plis -notamment entre dix et vingt plis-. Le nombre de plis 18 du soufflet 12 dépend de ces dimensions générales, de la gamme de débit que la pompe doit délivrer, et des caractéristiques du matériau utilisé. En particulier, il est à noter que plus le nombre de plis 18 est grand, moins élevées sont les contraintes de flexion élastique subies par chaque pli 18 (pour une valeur de débit nominal et pour un encombrement déterminés). En fonction des caractéristiques du matériau utilisé, le nombre de plis 18 est déterminé pour que la contrainte subie par chaque pli 18 reste inférieure à la contrainte limite de fatigue. On s'assure ainsi qu'aucun phénomène de fatigue ne puisse intervenir et limiter la durée de vie de la pompe. Sur la figure 2, on a représenté un soufflet 12 ayant cinq plis 18 à titre d'exemple non limitatif.

La paroi d'extrémité 13 du soufflet 12 est reliée par une vis 27 à une tige 28 de commande qui se prolonge dans la chambre de pompage externe 10 et est fixée solidaire en translation d'un organe actionneur 29 d'un dispositif moteur 30 électromagnétique d'entraînement du soufflet 12. L'organe actionneur 29 est disposé dans un prolongement 31 axial de la chambre de pompage 10 externe. Ce prolongement 31 est, outre sa communication avec la portion de la chambre de pompage externe 10 entourant le soufflet 12 hermétiquement clos. L'organe actionneur 29 est formé d'au moins une pièce ferromagnétique et/ou aimantée 32, qui est fixée rigidement à la tige 28 de commande. Cette pièce 32 est de préférence symétrique de révolution autour de l'axe principal de la tige de commande 28, elle-même co-axiale avec l'axe principal de symétrie du soufflet 12. De même, le prolongement 31 de la chambre de pompage externe 10 est de préférence symétrique de révolution autour de l'axe principal de symétrie du cylindre 6. La pièce aimantée 32 s'étend radialement dans le prolongement 31 de la chambre 10 jusqu'à venir à proximité immédiate d'une portion 33 ferromagnétique de la paroi 7, de sorte qu'un entrefer de faible épaisseur radiale est ménagé entre cette portion 33 et la pièce 32.

A l'extérieur de la portion 33 de la paroi 7, c'est-à-dire à l'extérieur du cylindre 6, la pompe comprend deux bobinages 34 disposés et adaptés pour pouvoir commander les déplacements de la pièce aimantée 32 en translation axiale dans un sens, et, respectivement, dans l'autre sens. La pièce aimantée 32 constitue donc ainsi une armature mobile pour l'électro-aimant formé des bobinages 34 et de cette pièce 32. Ce faisant, on transmet une énergie électromagnétique par induction à travers la portion 33 de paroi 7, depuis les bobinages 34 extérieurs au cylindre 6 jusqu'à la pièce aimantée 32 dans le cylindre 6, et ce sans aucune pièce mobile ou déformable traversant la paroi 7, et sans frottement solide dynamique.

L'organe actionneur 29 est guidé en translation axiale dans le prolongement 31 de la chambre 10, à l'intérieur du cylindre 6, par deux séries 35, 36 de lames flexibles associées à la tige de commande 28 et à la pièce 32 de chaque côté de cette pièce 32 à l'intérieur du prolongement 31 de la chambre 10. Ces lames flexibles 35, 36 sont adaptées pour maintenir constante l'épaisseur de l'entrefer entre la pièce 32 et la portion 33 de la paroi 7 en regard, tout en permettant les déplacements en translation axiale dans un sens et dans l'autre de la pièce 32 sous l'effet du champ magnétique créé par les bobinages 34. La raideur des lames flexibles 35, 36 selon la direction axiale est inférieure à celle du soufflet 12 selon cette même direction axiale de translation, de façon que toute l'énergie motrice soit utilisée pour mouvoir le soufflet 12. Chaque série 35, 36 de lames flexibles est quasiment indéformable selon la direction radiale. Pour ce faire, chaque série de lames flexibles 35, 36 est par exemple formée d'un empilage de couronnes métalliques reliées les unes aux autres deux à deux par deux zones de liaison diamétralement opposées. Les zones de liaison des couronnes deux à deux sont disposées selon des directions diamétrales successivement perpendiculaires les unes aux autres d'une extrémité axiale à l'autre de l'empilage ainsi formé.

L'empilage supérieur de lames flexibles 35 (à l'extrémité du corps de pompe 1 opposée au manifold 2) est fixé rigidement à un couvercle 38 du corps de pompe 1 grâce à des vis 39 parallèles à la direction axiale. De même, l'empilage inférieur de lames flexibles 36 (du côté du soufflet 12) est fixé à une plaque 40 solidaire du cylindre 6, par des vis 37 parallèles à la direction axiale.

Lorsque les bobinages 34 sont alimentés par une tension électrique alternative, l'organe actionneur 29 se déplace alternativement en translation axiale et entraîne ainsi en translation axiale alternative le soufflet 12 auquel il est relié.

Le couvercle 38, le cylindre 6 et la plaque de base 22 sont assemblés rigidement les uns aux autres par une série de vis périphériques 41 engagées dans des taraudages de la plaque de base 22.

Les cavités 24, 26 dans lesquelles débouchent les orifices d'entrée/sortie 23, 25 sont prolongées en communication avec des logements complémentaires d'une plaque inférieure 42 constituant le manifold 2. La lumière 23 constituant l'orifice d'entrée/sortie débouchant dans la chambre de pompage 10 externe au soufflet 12 s'étend sur une portion de secteur autour du soufflet 12 de longueur suffisante pour que la section efficace de cette lumière 23 permette le passage du débit de liquide à véhiculer. Dans l'exemple représenté, cette lumière 23 s'étend autour du soufflet 12 selon un arc définissant un secteur angulaire d'environ 90°. De même, la lumière 25 constituant l'orifice d'entrée/sortie communiquant avec la chambre de pompage interne 11 présente une section efficace correspondant au débit à véhiculer.

Chaque cavité 24, 26, c'est-à-dire chaque orifice d'entrée/sortie 23, 25, est en communication avec deux diodes fluidiques 43, 44, respectivement 45, 46, à savoir une diode fluidique aval 43, 45, et une diode fluidique amont 44, 46, ces diodes fluidiques 43 à 46 étant formées dans la plaque 42 constituant le manifold 2.

Les diodes fluidiques aval sont interposées entre la cavité 24, 26 correspondante et l'extrémité 5 de refoulement de la canalisation 3, par l'intermédiaire d'une cavité tampon 47 aval. Les diodes fluidiques aval 43, 45 sont "passantes" depuis la cavité 24, 26 correspondante vers la cavité tampon 47, c'est-à-dire sont "passantes" dans le sens d'écoulement du liquide vers l'extrémité de refoulement 5. Dans le sens opposé, les diodes fluidiques aval 43, 45 sont "résistantes". Autrement dit, les diodes fluidiques 43, 45 laissent librement s'écouler le liquide dans le sens aval vers l'extrémité de refoulement 5, et bloquent au contraire l'écoulement du liquide en sens opposé, c'est-à-dire en provenance de l'extrémité de refoulement 5.

Les diodes fluidiques amont 44, 46 sont interposées, par l'intermédiaire d'une cavité tampon amont 48, entre l'extrémité d'aspiration 4 de la canalisation 3 et chacune des cavités 24, 26, c'est-à-dire chacun des orifices d'entrée/sortie 23, 25 dans les chambres de pompage 10, 11. Là encore, les diodes fluidiques amont 44, 46 sont passantes dans le sens d'écoulement du liquide dans la canalisation 3, c'est-à-dire depuis l'extrémité d'aspiration 4 vers les cavités 24, 26, et sont au contraire résistantes dans le sens opposé.

Les diodes fluidiques 43 à 46 sont des diodes de type vortex, à savoir qu'elles sont formées d'une cavité principale cylindrique de révolution, d'un canal d'entrée co-axial à la cavité cylindrique et débouchant au centre du fond de cette cavité cylindrique, et d'un canal de sortie communiquant et débouchant tangentiellement dans la cavité cylindrique. Lorsque le liquide s'écoule du canal d'entrée vers le canal de sortie, la diode est passante, c'est-à-dire offre une moindre résistance. Au contraire, si le liquide tend à s'écouler en sens opposé, c'est-à-dire du canal de sortie vers le canal d'entrée, celui-ci est astreint à former un vortex au sein de la cavité principale créant ainsi une perte de charge et une résistance diminuant fortement, et limitant l'écoulement du liquide dans ce sens.

Par exemple, la diode amont 46 présente un canal d'entrée 49 débouchant dans la cavité tampon amont 48 et un canal de sortie 50 débouchant dans la cavité 26 communiquant avec l'orifice d'entrée/sortie 25 de la chambre de pompage externe 10. De même, la diode fluidique amont 44 comprend un canal d'entrée communiquant avec la cavité tampon amont 48, et un canal de sortie débouchant dans la cavité 24 communiquant avec l'orifice d'entrée/sortie 23 de la chambre de pompage interne 11. Ces diodes amont 44, 46 sont formées en creux dans la face supérieure de la plaque 42.

Les diodes fluidiques aval 43, 45 sont formées à l'inverse en creux par rapport à la face inférieure de la plaque 42 formant le manifold 2. La diode fluidique aval 45 présente canal d'entrée 51 débouchant dans la cavité 26 communiquant avec l'orifice d'entrée/sortie 25 de la chambre de pompage externe 10, et un canal de sortie 52 débouchant dans la cavité tampon aval 47. Il en va de même de la diode fluidique aval 43, dont le canal d'entrée débouche dans la cavité 24 communiquant avec l'orifice d'entrée/sortie 23 de la chambre de pompage interne 11, et dont le canal de sortie débouche dans la cavité tampon aval 47.

La plaque 42 est fixée par des vis 53 sur la plaque de base 22. Un fond 54 recouvre la face inférieure de la plaque 42 pour refermer les cavités tampons 47, 48 et les diodes fluidiques aval 43, 45.

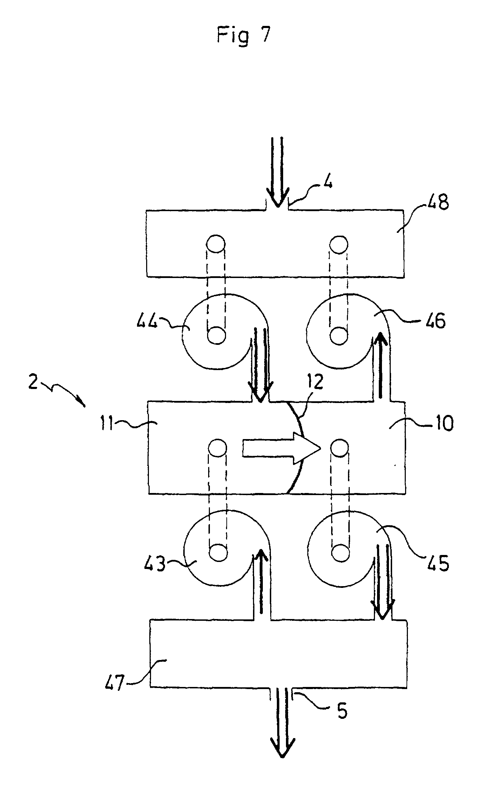

La figure 7 représente le fonctionnement du manifold lors de l'expansion du soufflet 12, la chambre de pompage exteme 10 diminuant de volume tandis que la chambre de pompage interne 11 augmente de volume. Comme on le voit, le liquide est pompé depuis l'extrémité d'aspiration 4 dans la cavité tampon amont 48, et par la diode fluidique amont 44 qui est passante dans la chambre de pompage interne 11 dont le volume augmente. Au contraire, la diode fluidique aval 43 reliée à la chambre de pompage interne 11 empêche le retour du liquide depuis la cavité tampon aval 47 dans cette chambre 11. Le liquide présent dans la chambre de pompage externe 10 est refoulé par la diode fluidique aval 45 qui est passante dans la cavité tampon aval 47, puis dans l'extrémité de refoulement de la canalisation 3. Au contraire, la diode fluidique amont 46 empêche le retour du liquide depuis la chambre 10 vers la cavité tampon amont 48.

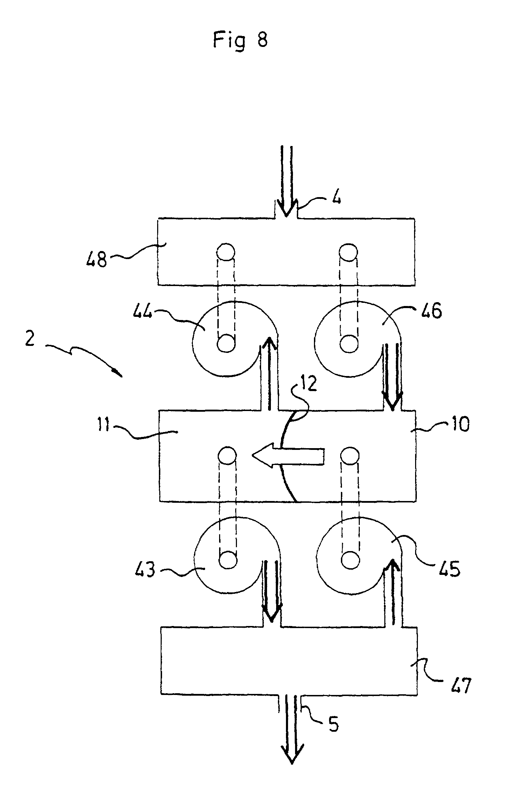

La figure 8 représente la position opposée, correspondant à la contraction du soufflet 12, la chambre interne 11 diminuant de volume, tandis que la chambre externe 10 augmente de volume. Les diodes fluidiques 44, 45 sont résistantes alors que les diodes fluidiques 43, 46 sont passantes.

Comme on le voit, la pompe selon l'invention est une pompe monocylindre à soufflet unique 12 de pompage à double effet, et comprenant un manifold 2 à quatre diodes fluidiques.

L'invention peut faire l'objet de nombreuses variantes par rapport au mode de réalisation représenté sur les figures. Il est à noter en particulier que la pompe représentée sur les figures n'a pas été optimisée en vue de son intégration sur un satellite. Il s'agit plutôt d'un dispositif expérimental permettant d'évaluer et d'ajuster les différentes caractéristiques et performances de la pompe selon l'invention. En pratique, pour réaliser une pompe intégrable dans un satellite, il n'est pas nécessaire de prévoir qu'elle soit démontable, de sorte que le nombre de pièces peut être considérablement réduit. Par exemple, le soufflet 12 peut être purement et simplement soudé sur le fond du cylindre 6, et l'ensemble du corps de pompe peut être formé en une seule pièce ultérieurement soudée sur la plaque de base 22, elle-même formée d'une seule pièce avec la plaque 42 et plus généralement avec le manifold 2.

Pour ajuster le débit fourni par la pompe dans la canalisation 3, il suffit de faire varier la fréquence des mouvements du soufflet en en pilotant la fréquence de la tension électrique qui alimente les bobinages 34.

La pompe selon l'invention est plus particulièrement applicable à une boucle de contrôle thermique à fluide caloporteur diphasique tel que de l'ammoniac. Le liquide pompé dans la canalisation 3 est alors un fluide caloporteur diphasique de cette boucle. Une telle boucle de contrôle thermique à liquide diphasique est connue en elle-même (cf. par exemple, Architecture Mécanique et Thermique "Cours de technologie spatiale", Toulouse, Cépaduès Editions, 1994, pp 437-453). Plus généralement, la pompe et la boucle de contrôle thermique à liquide diphasique selon l'invention sont applicables dans tout système spatial à longue durée de vie (satellite commercial inhabité, de télécommunication ou autre, station spatiale...).

### EXEMPLE :

Un prototype de pompe selon l'invention a été réalisé avec les dimensions et les caractéristiques suivantes :

Diamètre : 92mm, longueur : 220mm ; consommation électrique : 15W ; remontée de pression : 3.10⁴ Pa, soit une hauteur de pompage de l'ordre de 3m.

Sa durée de vie, de 10 à 15 ans, peut être démontrée par des essais au sol accélérés sur une durée de l'ordre d'un an, complétés par des analyses théoriques.

Une pompe selon l'invention peut être qualifiée pour être embarquée dans un système spatial et est adaptée pour le pompage du fluide diphasique d'une boucle de contrôle thermique à fluide diphasique.

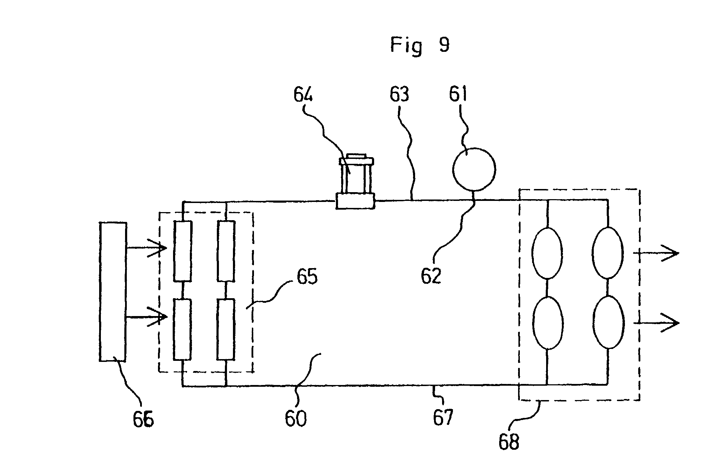

La figure 9 représente un exemple de dispositif de contrôle thermique selon l'invention comprenant une boucle 60 de contrôle thermique à liquide diphasique tel que de l'ammoniac, délivré à partir d'un réservoir 61 pressuriseur diphasique dont la sortie 62 est reliée à une conduite 63 connectée à une pompe 64 selon l'invention. Dans cette conduite 63, le fluide est monophasique liquide. La pompe 64 délivre le fluide à l'état liquide sous pression à un groupe évaporateur 65 adapté pour recueillir la puissance thermique (calories) dégagée par des composants exothermiques 66 (par exemple des circuits électroniques) du système spatial. A la sortie du groupe évaporateur 65, le fluide est amené à l'état diphasique liquide/gaz, selon la puissance absorbée, dans une conduite 67 reliée à un groupe de condenseurs 68 fournissant le fluide à l'état liquide dans la conduite 63 à l'amont de la sortie 62 du réservoir 61, en extrayant la puissance thermique vers une source froide.

## Revendications

1. Pompe à déplacement positif pour le pompage et l'entraînement d'un liquide dans une canalisation (3), comprenant :
. au moins un cylindre (6) renfermant un soufflet (12) de pompage déformable séparant deux chambres de pompage (10, 11) dans ce cylindre (6), l'une (11) des chambres de pompage étant formée de l'intérieur du soufflet (12) tandis que l'autre (10) est formée à l'extérieur du soufflet (12), ce cylindre (6) étant délimité par une paroi (7) hermétiquement close à l'exception d'orifices d'entrée/sortie (23, 25) du liquide débouchant dans chacune des chambres de pompage (10, 11),
. des moyens (30) moteurs associés au soufflet (12) adaptés pour le déformer et le déplacer alternativement dans le cylindre (6), les volumes des deux chambres de pompage (10, 11) variant en opposition, ces moyens (30) moteurs comprenant au moins un organe actionneur (29) ferromagnétique et/ou aimanté disposé à l'intérieur du cylindre (6) et relié au soufflet (12) pour le déformer et le déplacer, et des moyens (34) à bobinages, disposés à l'extérieure de la paroi (7) du cylindre (6), de transmission d'énergie motrice électromagnétique par induction à cet organe actionneur (29) depuis l'extérieur du cylindre (6), ces moyens (34) de transmission d'énergie motrice étant exempts de pièce traversant la paroi (7) du cylindre (6),
. un manifold (2) à diodes fluidiques (43, 44, 45, 46) de type vortex, exempt de valve à organe mobile, relié à la canalisation (3) et aux orifices d'entrée/sortie (23, 25), et adapté pour contrôler le sens global de pompage et d'écoulement du liquide dans la canalisation (3) lors des déformations et déplacements alternatifs du soufflet (12) dans le cylindre (6).

2. Pompe selon la revendication 1, **caractérisée en ce que** le soufflet (12) est métallique.

3. Pompe selon l'une des revendications 1 ou 2, **caractérisée en ce que** l'organe actionneur (29) est disposé dans un prolongement (31) de la chambre de pompage (10) disposée à l'extérieur du soufflet (12).

4. Pompe selon l'une des revendications 1 à 3, **caractérisée en ce que** l'organe actionneur (29) comprend une pièce (32) ferromagnétique et/ou aimantée, logée dans le cylindre (6), et reliée par une tige (28) à une paroi d'extrémité (13) du soufflet (12), de sorte que cette pièce (32) de l'organe actionneur (29) et cette paroi d'extrémité (13) sont solidaires en translation dans le cylindre (6).

5. Pompe selon l'une des revendications 1 à 4, **caractérisée en ce qu'**elle comporte des moyens (35, 36) de guidage en translation de l'organe actionneur (29) dans le cylindre (6), formés de lames flexibles dont la raideur axiale est inférieure à celle du soufflet (12).

6. Pompe selon l'une des revendications 1 à 5, **caractérisée en ce que** le manifold (2) comprend, interposée entre chaque chambre de pompage (10, 11) et une extrémité d'aspiration (4) de la canalisation (3), une diode fluidique amont (46, 44) passante vers la chambre de pompage (10, 11) correspondante, et, interposée entre chaque chambre de pompage (10, 11) et une extrémité de refoulement (5) de la canalisation (3), une diode fluidique aval (45, 43) passante vers l'extrémité de refoulement (5), de sorte que la pompe est du type à double effet.

7. Pompe selon l'une des revendications 1 à 6, **caractérisée en ce que** le manifold (2) comprend une cavité tampon amont (48) recevant le liquide d'une extrémité d'aspiration (4) de la canalisation (3) et une cavité tampon aval (47) de laquelle le liquide est refoulé vers une extrémité de refoulement (5) de la canalisation (3), et **en ce que** les diodes fluidiques (43, 44, 45, 46) sont interposées entre ces cavités tampons (47, 48) et les orifices d'entrée/sortie (23, 25) dans les chambres de pompage (10, 11).

8. Pompe selon l'une des revendications 1 à 7, **caractérisée en ce que** les moyens (30) moteurs sont adaptés pour commander l'organe (12) de pompage à une fréquence comprise entre 1 Hz et 50 Hz, notamment entre 1 Hz et 10 Hz.

9. Dispositif de contrôle thermique des composants d'un système spatial, tel qu'un satellite ou une station spatiale, comprenant une boucle de liquide caloporteur diphasique et au moins une pompe conforme à l'une des revendications précédentes.

## Patentansprüche

1. Verdrängungspumpe zum Pumpen und Führen einer Flüssigkeit in einer Rohrleitung (3), die folgendes umfasst:
. wenigstens einen Zylinder (6), der einen verformbaren Pumpblasebalg (12) umgibt, der zwei Pumpkammern (10, 11) in dem Zylinder (6) trennt, wobei die eine (11) der Pumpkammern vom Inneren des Blasebalgs (12) gebildet wird, während die andere (10) außerhalb des Blasebalgs (12) gebildet wird, wobei der Zylinder (6) durch eine Wand (7) begrenzt ist, die hermetisch geschlossen ist, mit Ausnahme von Ein-/Austrittsöffnungen (23, 25) für die Flüssigkeit, die in jede Pumpkammer (10, 11) münden,
. Antriebsmittel (30) in Verbindung mit dem Blasebalg (12), deren Aufgabe es ist, diesen abwechselnd im Zylinder (6) zu verformen und zu bewegen, wobei sich die Volumen der beiden Pumpkammern (10, 11) entgegengesetzt ändern, wobei diese Antriebsmittel (30) wenigstens ein ferromagnetisches und/oder magnetisches Stellglied (29) umfassen, das im Inneren des Zylinders (6) angeordnet und mit dem Blasebalg (12) verbunden ist, um diesen zu verformen und zu bewegen, und Spulen (34), die auf der Außenseite der Wand (7) des Zylinders (6) angeordnet sind, um die elektromagnetische Antriebsenergie durch Induktion auf das Stellglied (29) von der Außenseite des Zylinders (6) zu übertragen, wobei sich in diesen Mitteln (34) zum Übertragen der Antriebsenergie keine Teile befinden, die die Wand (7) des Zylinders (6) durchqueren,
. einen Verteiler (2) mit strömungsmechanischen Dioden (43, 44, 45, 46) des Wirbeltyps, der frei von Ventilen mit beweglichen Elementen ist, mit der Rohrleitung (3) und den Ein-/Austrittsöffnungen (23, 25) verbunden ist und der die Aufgabe hat, die allgemeine Pump- und Fließrichtung der Flüssigkeit in der Rohrleitung (3) während der abwechselnden Verformungen und Bewegungen des Blasebalgs (12) im Zylinder (6) zu steuern.

2. Pumpe nach Anspruch 1, **dadurch gekennzeichnet, dass** der Blasebalg (12) metallisch ist.

3. Pumpe nach nach einem der Ansprüche 1 oder 2, **dadurch gekennzeichnet, dass** das Stellglied (29) in einer Verlängerung (31) der Pumpkammer (10) angeordnet ist, die außerhalb des Blasebalgs (12) angeordnet ist.

4. Pumpe nach einem der Ansprüche 1 bis 3, **dadurch gekennzeichnet, dass** das Stellglied (29) ein ferromagnetisches und/oder magnetisches Teil (32) umfasst, das sich in dem Zylinder (6) befindet und durch eine Stange (28) so mit einer Endwand (13) des Blasebalgs (12) verbunden ist, dass dieses Teil (32) des Stellgliedes (29) und diese Endwand (13) als eine Einheit im Zylinder (6) translational verschoben werden.

5. Pumpe nach einem der Ansprüche 1 bis 4, **dadurch gekennzeichnet, dass** sie Mittel (35, 36) zur Translationsführung des Stellgliedes (29) im Zylinder (6) aufweist, die aus flexiblen Lamellen gebildet sind, deren axiale Steifigkeit geringer ist als die des Blasebalgs (12).

6. Pumpe nach einem der Ansprüche 1 bis 5, **dadurch gekennzeichnet, dass** der Verteiler (2) zwischen jeder Pumpkammer (10, 11) und einem Ansaugende (4) der Rohrleitung (3) eine stromaufwärtige strömungsmechanische Diode (46, 44) aufweist, die auf die entsprechende Pumpkammer (10, 11) zu verläuft, und zwischen jeder Pumpkammer (10, 11) und einem Förderende (5) der Rohrleitung (3) eine stromabwärtige strömungsmechanische Diode (45, 43) aufweist, die auf das Förderende (5) zu verläuft, so dass die Pumpe vom Doppelwirkungstyp ist.

7. Pumpe nach einem der Ansprüche 1 bis 6, **dadurch gekennzeichnet, dass** der Verteiler (2) einen stromaufwärtigen Pufferhohlraum (48), der Flüssigkeit von einem Ansaugende (4) der Rohrleitung (3) aufnimmt, und einen stromabwärtigen Pufferhohlraum (47) aufweist, von dem die Flüssigkeit auf das Förderende (5) der Rohrleitung (3) zu gefördert wird, und dadurch, dass die strömungsmechanischen Dioden (43, 44, 45, 46) zwischen diesen Pufferhohlräumen (47, 48) und den Ein/Austrittsöffnungen (23, 25) in den Pumpkammern (10, 11) angeordnet sind.

8. Pumpe nach einem der Ansprüche 1 bis 7, **dadurch gekennzeichnet, dass** die Antriebsmittel (30) die Aufgabe haben, den Pumpmechanismus (12) mit einer Frequenz zwischen 1 Hz und 50 Hz, insbesondere zwischen 1 Hz und 10 Hz zu steuern.

9. Vorrichtung zur thermischen Steuerung von Komponenten eines Raumsystems wie z.B. eines Satelliten oder einer Raumstation, umfassend einen Kreislauf für einen zweiphasigen flüssigen Wärmeträger und wenigstens eine Pumpe gemäß einem der vorhergehenden Ansprüche.

## Claims

1. Positive displacement pump for pumping and entrainment of a fluid in piping (3), comprising:
. at least one cylinder (6) which contains deformable pumping bellows (12) which separate two pumping chambers (10, 11) in this cylinder (6), one (11) of the pumping chambers being formed inside the bellows (12), whereas the other (10) is formed outside the bellows (12), this cylinder (6) being delimited by a wall (7) which is hermetically sealed, with the exception of apertures for intake/output (23, 25) of the fluid, which open into each of the pumping chambers (10, 11);
. drive means (30) which are associated with the bellows (12), and are designed to deform the latter and displace it reciprocally in the cylinder (6), the volumes of the two pumping chambers (10, 11) varying in opposition, these drive means (30) comprising at least one ferromagnetic and/or magnetised actuator unit (29) which is disposed inside the cylinder (6), and is connected to the bellows (12) in order to deform and displace the latter, and coil means (34), which are disposed outside the wall (7) of the cylinder (6), for transmission of electromagnetic drive energy by induction to this actuator unit (29) from outside the cylinder (6), these drive energy transmission means (34) being without any part which passes through the wall (7) of the cylinder (6); and
. a manifold (2) with fluid diodes (43, 44, 45, 46) of the vortex type, which is without a mobile unit valve, is connected to the piping (3) and to the intake/output apertures (23, 25), and is designed to control the global direction of pumping and flow of the fluid in the piping (3), during reciprocal deformations and displacements of the bellows (12) in the cylinder (6).

2. Pump according to claim 1, **characterized in that** the bellows (12) are made of metal.

3. Pump according to claim 1 or claim 2, **characterized in that** the actuator unit (29) is disposed in an extension (31) of the pumping chamber (10), which is disposed outside the bellows (12).

4. Pump according to one of claims 1 to 3, **characterized in that** the actuator unit (29) comprises a ferromagnetic and/or magnetised part (32), which is accommodated in the cylinder (6), and is connected by a rod (28) to an end wall (13) of the bellows (12), such that this part (32) of the actuator unit (29) and this end wall (13) are integral in translation in the cylinder (6).

5. Pump according to any one of claims 1 to 4, **characterized in that** it comprises means (35, 36) for guiding the actuator unit (29) in translation in the cylinder (6), consisting of flexible plates, the axial rigidity of which is less than that of the bellows (12).

6. Pump according to any one of claims 1 to 5, **characterized in that** the manifold (2) comprises, interposed between each pumping chamber (10, 11) and a suction end (4) of the piping (3), an upstream fluid diode (46, 44), which is through-putting towards the corresponding pumping chamber (10, 11), and, interposed between each pumping chamber (10, 11) and a delivery end (5) of the piping (3), a downstream fluid diode (45, 43), which is through-putting towards the delivery end (5), such that the pump is of the double-effect type.

7. Pump according to any one of claims 1 to 6, **characterized in that** the manifold (2) comprises an upstream accumulator cavity (48), which receives the fluid from a suction end (4) of the piping (3), and a downstream accumulator cavity (47), from which the fluid is delivered towards a delivery end (5) of the piping (3), and **in that** the fluid diodes (43, 44, 45, 46) are interposed between the accumulator cavities (47, 48) and the intake/output apertures (23, 25) in the pumping chambers (10, 11).

8. Pump according to any one of claims 1 to 7, **characterized in that** the drive means (30) are designed to control the pumping unit (12), at a frequency of between 1 Hz and 50 Hz, and in particular between 1 Hz and 10 Hz.

9. Device for thermal control of the components of a space system, such as a satellite or a space station, comprising a diphasic heat-transfer fluid loop, and at least one pump according to one of the preceding claims.
